Europäisches Patentamt

European Patent Office

Office européen des brevets

(11) Veröffentlichungsnummer: **0 260 220**
**A1**

(12) # EUROPÄISCHE PATENTANMELDUNG

(21) Anmeldenummer: 87730076.4

(22) Anmeldetag: 08.07.87

(51) Int. Cl.⁴: **F 16 L 55/16**

(30) Priorität: 14.08.86 DE 3627620

(43) Veröffentlichungstag der Anmeldung:
16.03.88 Patentblatt 88/11

(84) Benannte Vertragsstaaten:
AT BE CH DE ES FR GB GR IT LI LU NL SE

(71) Anmelder: Karl Weiss G.m.b.H. & Co.
Machnower Strasse 27
D-1000 Berlin 37 (DE)

(72) Erfinder: Kollosch, Hans-Joachim
Schwerin Strasse 15
D-1000 Berlin 30 (DE)

Schwert, Siegfried
Nieritzweg 11
D-1000 Berlin 37 (DE)

(74) Vertreter: Pfenning, Melnig & Partner
Kurfürstendamm 170
D-1000 Berlin 15 (DE)

(54) Verfahren zum Einbringen von Rohren in eine Rohrleitung.

(57) Es wird ein neues Verfahren zum Einbringen von einen durchgehenden Leitungszug bildenden kurzen Rohren in eine bestehende, zu sanierende Rohrleitung (1) beschrieben. Die Rohrleitung (1) wird zunächst von einer Meßvorrichtung (3) durchfahren, die die axiale Lage und die Winkelposition der Mündungen von mit der Rohrleitung verbundenen Abzweiglei-tungen (2) in Abhängigkeit von vorgegebenen Bezugswerten ermittelt. Die entsprechenden Meßdaten werden gespeichert. Sodann werden die Rohre (8) nacheinander in die Rohrleitung eingebracht und zu einem durchgehenden Leitungszug verbun-den. Anschließend werden die Rohre von einer Anbindungsvor-richtung (9) durchfahren, die gesteuert von den gespeicherten Daten Öffnungen in die Rohre schneidet. Hiernach wird von der Anbindungsvorrichtung (9) in jede geschnittene Öffnung eine Dichtmanschette (13) zur Überbrückung des Zwischenraums zwischen der Öffnung und der Abzweigleitung eingesetzt und schließlich wird der Zwischenraum zwischen den Rohren und der Rohrleitung mit einem dichtenden Verpreßmaterial ausge-füllt. Danach können die Dichtmanschetten (13) wieder entfernt werden.

# Beschreibung

## Verfahren zum Einbringen von Rohren in eine Rohrleitung

Die Erfindung betrifft ein Verfahren nach dem Oberbegriff des Anspruchs 1.

Insbesondere zur Sanierung undichter Rohrleitungen ist ein Verfahren bekannt, bei dem relativ kurze (ca. 700 mm), aus Kunststoff bestehende Rohre an einer Zugangsstelle nacheinander in die Rohrleitung eingeschoben oder eingezogen werden. Die hintereinanderliegenden Rohre sind in der Regel durch eine Steckverbindung wasserdicht miteinander verbunden und bilden einen durchgehenden Leitungszug. Der Zwischenraum zwischen der Außenwand der eingebrachten Rohre und der Innenwand der Rohrleitung wird anschließend mit einer sogenannten Dämmersuspension, wie Porenleichtbeton oder dergleichen, verpreßt. Schwierigkeiten ergeben sich insbesondere dann, wenn Abzweigleitungen wie Hausanschlüsse in die Rohr leitung münden. In diesem Fall muß eine dichte Verbindung zwischen der Abzweigleitung und dem Inneren des der Mündung der Abzweigleitung gegenüberliegenden eingebrachten Rohres hergestellt werden. Hierzu ist ein Verfahren bekannt, bei dem soviel Rohre zunächst in die Rohrleitung eingeschoben oder eingezogen werden, daß das Ende des letzten Rohres sich kurz vor der ersten Abzweigleitung befindet. Es wird dann mit Hilfe einer Fernsehkamera die Entfernung zwischen dem Ende der eingebrachten Rohre und der Abzweigleitung gemessen und entsprechend außerhalb der Rohrleitung eine Öffnung in das nächstfolgende Rohr geschnitten, so daß sich diese Öffnung, wenn das Rohr in die Rohrleitung eingebracht ist, der Mündung der Abzweigleitung direkt gegenübersteht. Das Rohr wird hierzu auf den Haltearm eines Installationswagens aufgesteckt und mittels Pneumatikstempeln fixiert. Eine füllbare Abdichtmanschette wird auf der Außenseite des Rohres um die ausgeschnittene Öffnung herum befestigt. Das Rohr wird dann auf dem Installationswagen in die Rohrleitung eingefahren. Mit einer sich am Ende der bereits eingebrachten Rohre befindenden Fernsehkamera wird kontrolliert, ob die in das Rohr eingeschnittene Öffnung und die Mündung der Abzweigleitung sich decken. Wenn diese in ihrer Lage voneinander abweichen, wird der Haltearm des Installationswagens so lange gedreht, bis sich die beiden Öffnungen direkt gegenüberliegen. Dann wird über den Installationswagen die Dichtmanschette gefüllt, so daß sie den Ringspalt zwischen der Rohrleitung und dem eingebrachten Rohr fest umschließt und so die Abzweigleitung dicht in den aus den eingebrachten Rohren gebildeten Leitungszug fest einbindet. Anschließend werden weitere Rohre eingeschoben oder eingezogen, bis sich deren Ende kurz vor der nächsten Abzweigleitung befindet. Die Einbindung dieser Abzweigleitung erfolgt in der vorbeschriebenen Weise. Wenn eine Haltung, d.h. der Rohrleitungsabschnitt zwischen zwei üblicherweise in Form von Schächten vorliegenden Zugangsstellen, dermaßen mit einem inneren Leitungszug von kurzen Rohren versehen ist, wird der Zwischenraum zwischen den Rohren und der Rohrleitung mit dem Dämmermaterial verfüllt.

Bei diesem Verfahren ist insbesondere nachteilig, daß die Verlegung der Rohre bei jeder Abzweigleitung unterbrochen werden muß, um die Lage der Abzweigleitung in bezug auf die bereits eingebrachten Rohre festzustellen und eine entsprechende Öffnung in das nächstfolgende Rohr zu schneiden. Auch kann das manuell erfolgende Justieren des Rohres mit dem Installationswagen langwierig sein und erhebliche Geschicklichkeit erfordern. Da auch das Ausschneiden der Rohröffnungen manuell anhand eines Fernsehbildes erfolgt, können hier ebenfalls Ungenauigkeiten auftreten, die dazu führen, daß sich die Mündung einer Abzweigleitung und die entsprechende Öffnung im eingebrachten Rohr nicht genau decken.

Ein weiterer wesentlicher Nachteil des bekannten Verfahrens besteht darin, daß die Dichtmanschetten beim Einführen der Rohre in die Rohrleitung an deren Innenwand entlanggleitet und durch scharfkantige Vorsprünge oder dergleichen leicht beschädigt werden kann. Eine derartige Beschädigung bemerkt man in der Regel jedoch erst dann, wenn die Manschette bereits gefüllt wird. Die Herausnahme des zugeordneten Rohres und das Auswechseln der beschädigten Manschette sind dann besonders mühsam.

Es ist daher die Aufgabe der vorliegenden Erfindung, das bekannte Verfahren so zu verbessern, da das Anbinden der Abzweigleitungen an die eingebrachten Rohre einfacher und sicherer, in kürzerer Zeit sowie schließlich auch genauer erfolgt.

Diese Aufgabe wird erfindungsgemäß gelöst durch die im kennzeichnenden Teil des Anspruchs 1 angegebenen Merkmale. Vorteilhafte Weiterbildungen des erfindungsgemäßen Verfahrens ergeben sich aus den Unteransprüchen.

Die Erfindung zeichnet sich dadurch aus, daß zunächst die Rohrleitung von einer Meßvorrichtung durchfahren wird, die die axiale Lage und die Winkelposition der Mündungen der Abzweigleitungen in Abhängigkeit von vorgegebenen Bezugswerten ermittelt und entsprechende Daten gespeichert werden. Sodann werden die Rohre in die Rohrleitung eingebracht. Anschließend werden die Rohre von einer Anbindungsvorrichtung durchfahren, die gesteuert von den gespeicherten Daten Öffnungen in die Rohre schneidet. Hiernach wird von der Anbindungsvorrichtung in jede geschnittene Öffnung eine Dichtmanschette zur Überbrückung des Zwischenraums zwischen der Öffnung und der Abzweigleitung eingesetzt und schließlich wird der Zwischenraum zwischen den Rohren und der Rohrleitung mit einem dichtenden Verpreßmaterial ausgefüllt.

Die Anbindung der einzelnen Abzweigleitungen erfolgt somit vollautomatisch und durch die Festlegung von gemeinsamen Bezugswerten jeweils für die axiale Lage sowie die Winkellage der einzelnen Abzweigleitungen kann das Schneiden der Rohröffnungen wesentlich genauer erfolgen als bei dem bekannten, vorwiegend manuellen Verfahren.

Die Meßvorrichtung besitzt vorzugsweise zwei Fernsehkameras, so daß die axiale Lage und die Winkellage der Abzweigleitungen getrennt ermittelt werden können. Hierbei ist die die Winkellage erfassende Kamera zweckmäßig um die in Bewegungsrichtung der Meßvorrichtung liegende Achse drehbar angeordnet.

Die axiale Lage der Mündungen der Abzweigleitungen wird vorteilhaft mit Hilfe einer Lasermeßeinrichtung festgestellt, wobei der gemeinsame Bezugspunkt im Bereich der Zugangsstelle gewählt wird. Mit einer derartigen Meßeinrichtung lassen sich die axialen Positionswerte vorzugsweise die Mittelpunkte der Mündungen der Abzweigleitungen äußerst genau feststellen.

Die von der Meßvorrichtung gelieferten Daten werden bevorzugt in einen Rechner eingegeben und zur Berechnung der jeweiligen Länge der einzelnen Rohre verwendet. Auf diese Weise wird verhindert, daß die Mündung einer Abzweigleitung direkt gegenüber der Verbindungsstelle zweier Rohre liegt.

Damit die Rohröffnungen genau übereinstimmend mit den zugeordneten Mündungen der Abzweigleitungen hergestellt werden, werden die Öffnungen zweckmäßig zunächst mit einem geringeren Durchmesser als dem der jeweiligen Mündung ausgeschnitten und dann mit Hilfe eines die Mündungen abtastenden Fühlers auf die Mündungsgröße fertiggeschnitten.

Durch die paßgenaue Übereinstimmung der Rohröffnung mit der Mündung der Abzweigleitung ist es möglich, eine Dichtmanschette zu verwenden, die mit ihrer Außenseite sowohl am Rand der ausgeschnittenen Öffnung und an der innenwand der Abzweigleitung anliegt. Damit die Dichtmanschette mühelos in diese Position gebracht und auch wieder aus dieser entfernt werden kann und trotzdem eine hohe Dichtwirkung besitzt, ist sie vorzugsweise aufblasbar. Um ihre Handhabung zu erleichtern und auch einen vorgegebenen Innendurchmesser der aufgeblasenen ringförmigen Manschette zu erhalten, weist diese auf ihrer Innenseite einen starren Stützkörper auf.

Die Erfindung wird im folgenden anhand eines in den Figuren dargestellten Ausführungsbeispiels näher erläutert. Es zeigen:

Fig. 1 in schematischer Darstellung eine Meßvorrichtung in Form eines Wagens,

Fig. 2 eine schematische Schnittdarstellung der Meßvorrichtung nach Fig. 1 quer zur Rohrleitungslängsrichtung im Bereich der die Winkelposition erfassenden Fernsehkamera,

Fig. 3 in schematischer Darstellung eine Anbindungsvorrichtung in Form eines Wagens, und

Fig. 4 eine zwischen einem eingebrachten Rohr und einer Abzweigleitung eingesetzte Dichtmanschette.

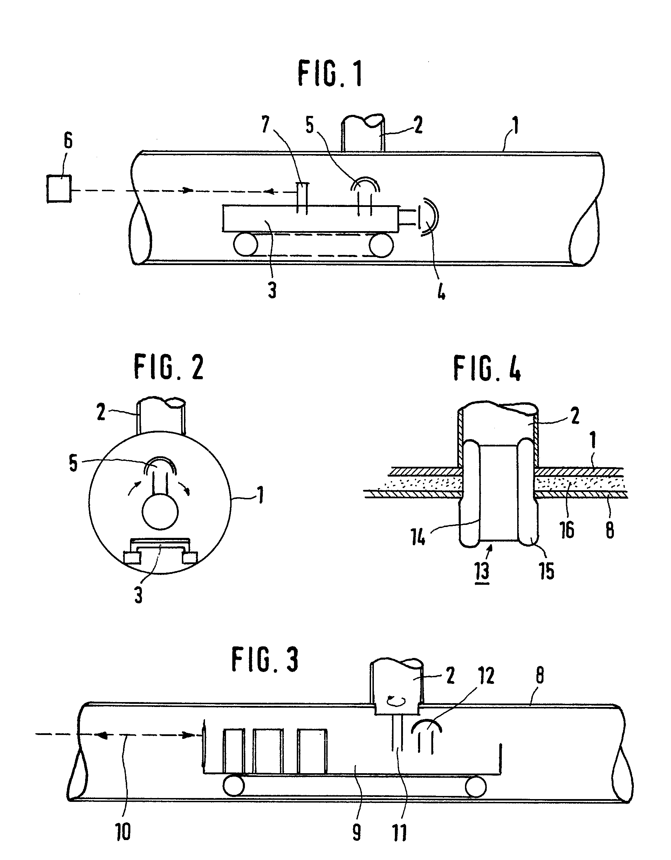

Die Rohrleitung 1 in Fig. 1 ist eine nichtbegehbare Freispiegelleitung für die Regen-, Schmutz- oder Mischwasserkanalisation, die durch Einbringen eines Leitungszugs aus kurzen Rohren mit einer Länge von jeweils etwa 70 cm saniert werden soll.

Die kurzen Rohre können aus Kunststoff, vorzugsweise Polyethylen hoher Dichte, glasfaserverstärktem Kunststoff, Asbestzement, Steinzeug, Edelstahl oder einem gleichwertigen Material bestehen. Mit der Rohrleitung 1 sind Abzweigleitungen 2, beispielsweise Hausanschlüsse, verbunden.

Vor dem Einbringen der Rohre in die Rohrleitung 1 wird von einem Zugangsschacht aus ein Meßwagen 3 durch die Rohrleitung 1 gefahren. Der Meßwagen 3 ist mit zwei Fernsehkameras 4 und 5 sowie entsprechenden Lichtquellen zur optischen Abtastung des Inneren der Rohrleitung 1 ausgestattet. Die Fernsehkameras 4 und 5 dienen insbesondere zur Feststellung der axialen Lage und der Winkelposition der einzelnen Abzweigleitungen 2. Die von den beiden Fernsehkameras 4 und 5 aufgenommenen Bilder werden auf Monitoren, die beispielsweise in einer oberhalb des Zugangsschachtes angeordneten mobilen Einheit untergebracht sind, wiedergegeben.

Die Fernsehkamera 4 ist horizontal ausgerichtet und sucht die Innenwandung der Rohrleitung 1 auf das Vorhandensein von Abzweigleitungen 2 ab. Die Fernsehkamera 5 dreht sich mit der zugeordneten Lichtquelle um eine in Bewegungsrichtung des Meßwagens 3 liegende Achse in einem Winkelbereich von 400 Gon. Sie kann daher jede beliebige Winkelposition einer Abzweigleitung 2 erfassen.

Der Meßwagen 3 wird mit Hilfe des auf einem Monitor dargestellten Bild der Fernsehkamera 4 so eingestellt, daß sich die Fernsehkamera 5 in axialer Richtung in Höhe einer Abzweigleitung 2 befindet. Die Fernsehkamera 5 wird dann so geschwenkt und die axiale Stellung des Meßwagens 3 gegebenenfalls so korrigiert, daß sich auf dem entsprechenden Monitorbild der Mittelpunkt der Mündung der Abzweigleitung 2 genau in der Mitte befindet. Mittels einer Lasermeßeinrichtung, deren stationärer Teil 6 sich im Zugangsschacht und deren mobiler Teil 7 sich auf dem Meßwagen 3 befinden, wird nun die genaue axiale Lage der Abzweigleitung 2 festgestellt. Die zugehörige Winkelposition ergibt sich aus dem eingestellten Schwenkwinkel der Fernsehkamera 5. Die Lasermeßeinrichtung und die Winkelmeßeinrichtung besitzen eine direkte Schnittstelle, so daß die Meßdaten unmittelbar in einem ebenfalls oberhalb des Zugangsschachtes stationierten Rechner gespeichert werden.

Nach entsprechender Ausmessung aller Abzweigleitungen 2 werden die so gespeicherten Daten vom Rechner zu einem Verlegeplan verarbeitet, in dem für die einzelnen einzubringenden Rohre bestimmte Längen oder die Einfügung zusätzlicher Paßstücke vorgegeben werden, derart, daß die Mündungen aller Abzweigleitungen 2 jeweils etwa in der Mitte eines Rohres liegen, so daß mit Sicherheit ausgeschlossen ist, daß die Anbindung einer Abzweigleitung im Überlappungsbereich zweier hintereinanderliegender Rohre erfolgt. Die Rohre werden dann gemäß diesem Verlegeplan zur Bildung eines geschlossenen Leitungszuges zwischen zwei Zugangsschächten in die Rohrleitung 1 eingebracht.

Nach der Verlegung der Rohre 8 (Fig. 3) in der Rohrleitung 1 (diese ist in Fig. 3 aus Gründen der Übersichtlichkeit nicht dargestellt) wird ein Anbindungswagen 9 durch den aus den Rohren 8 gebildeten Leitungszug gefahren. Eine Lasermeßeinrichtung 10 stellt die jeweilige axiale Lage des Anbindungswagens 9 innerhalb der Rohre 8 fest. Von den im Rechner gespeicherten Meßdaten werden die Bewegung des Anbindungswagens 9 und die Betätigung eines auf diesem installierten Schneidwerkzeugs 11 gesteuert. Das Schneidwerkzeug 11 schneidet an der Stelle, an der eine Abzweigleitung 2 in die Rohrleitung 1 mündet, eine Öffnung in die Wand des entsprechenden Rohres 8. Diese Öffnung ist zunächst beträchtlich kleiner als die Mündung der Abzweigleitung 2; sie ist jedoch ausreichend groß, daß ein mit dem Schneidwerkzeug 11 verbundener Fühler durch die Öffnung hindurch in die Abzweigleitung 2 hineingreift und die Größe der Mündung abtastet; das Schneidwerkzeug 11 wird dabei vom Fühler entsprechend gesteuert, so daß schließlich die fertiggeschnittene Öffnung und die Mündung der zugeordneten Abzweigleitung 2 paßgenau übereinstimmen. Dies ist ein Erfordernis für das noch zu beschreibende Einsetzen der Dichtmanschetten.

Auf dem Anbindungswagen 9 ist auch eine Fernsehkamera 12 installiert, mit deren Hilfe das Schneiden der Öffnungen und auch die sonstigen Funktionen des Anbindungswagens 9 visuell überwacht werden können.

Bei der von den Meßdaten gesteuerten Bewegung des Anbindungswagens 9 bzw. der Betätigung seiner Werkzeuge ist zu berücksichtigen, daß die Meßachsen für den Meßwagen und den Anbindungswagen nicht übereinstimmen, da sie in verschiedenen Höhe durch die Rohrleitung 1 bzw. die Rohre 8 fahren. Dieser Höhenunterschied muß vom Rechner kompensiert werden.

Nach dem paßgenauen Schneiden einer Öffnung in die Wand eines Rohres 8 wird durch den Anbindungswagen 9 eine mitgeführte Dichtmanschette 13 in der aus Fig. 4 ersichtlichen Weise in die Öffnung und in die Mündung der Abzweigleitung 2 eingesetzt. Die Dichtmanschette 13 besteht aus einem inneren Stahlstützkörper 14 und einer diesen umgebenden aufblasbaren ringförmigen Blase 15. Die Dichtmanschette 13 wird im nicht aufgeblasenen Zustand der Blase 15 in die Stellung gemäß Fig. 4 gebracht und dann die Blase 15 über ein Ventil durch eine auf dem Anbindungsroboter 9 befindliche Gaspatrone aufgeblasen. Somit wird der Zwischenraum zwischen der Rohrleitung 1 und dem Rohr 8 abgedichtet und die Abzweigleitung 2 braucht nicht abgesperrt zu werden, da der Stahlstützkörper 14 eine Verbindung mit vorgegebenem Durchlaßquerschnitt zwischen der Abzweigleitung 2 und dem aus den Rohren 8 gebildeten Leitungszug sicherstellt.

In diesen Leitungszug werden nacheinander in der beschriebenen Weise den vorhandenen Abzweigleitungen 2 zugeordnete Öffnungen geschnitten und jeweils die erforderliche Abdichtung vorgenommen. Der Anbindungswagen 9 führt eine der Anzahl der Abzweigleitungen 2 entsprechende Anzahl von Dichtmanschetten 13 mit sich. Anschließend wird eine Dä-mersuspension 16 in den Zwischenraum zwischen Rohrleitung 1 und Rohren 8 gepreßt, die sich verfestigt und einen wasserdichten Abschluß im Bereich der Abzweigleitungen 2 bildet. Die Dichtmanschette 13 werden daher nicht mehr benötigt. Der Anbindungswagen 9 durchfährt daher nochmals die Rohre 8, wobei er an jeder Dichtmanschette 13 das Ventil der Blase 15 öffnet, so daß er die Manschette mühelos aus der Abzweigleitung 2 und der Rohröffnung herausziehen kann.

Es empfiehlt sich, mittels der Fernsehkamera 12 nachzuprüfen, ob an jeder Anbindungsstelle einer Abzweigleitung 2 die Dämmersuspension 16 den Zwischenraum zwischen der Rohrleitung 1 und dem jeweiligen Rohr 8 vollständig und dicht ausfüllt. Hierzu sollte der Anbindungswagen 9 auch in der Lage sein, etwaige Ausbildungen der Wandlaibungen mit Hilfe einer geeigneten Spachtelmasse durchzuführen.

**Patentansprüche**

1. Verfahren zum Einbringen von einen durchgehenden Leitungszug bildenden Rohren in eine bestehende Rohrleitung, bei dem die Rohre an einer Zugangsstelle der Rohrleitung nacheinander in diese eingebracht und miteinander verbunden werden, und bei dem die Rohre mit Öffnungen an den Stellen versehen werden, an denen Abzweigleitungen in die Rohrleitung münden und eine Abdichtung der Verbindung jeweils zwischen einem Rohr und der zugeordneten Abzweigleitung gegenüber dem Zwischenraum zwischen Rohr und Rohrleitung erfolgt, **dadurch gekennzeichnet,** daß zunächst die Rohrleitung (1) von einer Meßvorrichtung (3) durchfahren wird, die die axiale Lage und die Winkelposition der Mündungen der Abzweigleitungen (2) in Abhängigkeit von vorgegebenen Bezugswerten ermittelt und entsprechende Daten gespeichert werden, daß dann die Rohre (8) in die Rohrleitung (1) eingebracht werden, daß anschließend die eingebrachten Rohre (1) von einer Anbindungsvorrichtung (9) durchfahren werden, die gesteuert von den gespeicherten Daten Öffnungen in die Rohre (8) schneidet und jeweils eine ringförmige Dichtmanschette (13) in die geschnitten Öffnungen zur Überbrückung des Zwischenraums zwischen diesen und den Abzweigleitungen (2) einsetzt, und daß schließlich der Zwischenraum zwischen den Rohren (8) und der Rohrleitung (1) mit einem dichtenden Verpreßmaterial (16) ausgefüllt wird.

2. Verfahren nach Anspruch 1, dadurch gekennzeichnet , daß die Meßvorrichtung (3) zwei Fernsehkameras (4,5) besitzt.

3. Verfahren nach Anspruch 2, dadurch gekennzeichnet, daß die die Winkelposition erfassende Fernsehkamera (5) um die in Bewegungsrichtung der Meßvorrichtung (3) liegende Achse drehbar angeordnet ist.

4. Verfahren nach einem der Ansprüche 1 bis 3, dadurch gekennzeichnet, daß die Rohre (8) aus Kunststoff bestehen.

5. Verfahren nach Anspruch 4, dadurch gekennzeichnet, daß die Rohre (8) aus Polyethylen bestehen.

6. Verfahren nach Anspruch 4, dadurch gekennzeichnet, daß die Rohre (8) aus glasfaserverstärktem Kunststoff bestehen.

7. Verfahren nach Anspruch 4, dadurch gekennzeichnet, daß die Rohre (8) aus Asbestzement bestehen.

8. Verfahren nach Anspruch 4, dadurch gekenn zeichnet, daß die Rohre (8) aus Steinzeug bestehen.

9. Verfahren nach Anspruch 4, dadurch gekennzeichnet, daß die Rohre (8) aus Edelstahl bestehen.

10. Verfahren nach einem der Ansprüche 1 bis 9, dadurch gekennzeichnet, daß als Verpreßmaterial Dämmermaterial (16) verwendet wird.

11. Verfahren nach einem der Ansprüche 1 bis 10, dadurch gekennzeichnet, daß die axiale Lage der Mündungen der Abzweigleitungen (2) mit Hilfe einer Lasermeßeinrichtung (6,7) festgestellt wird, wobei der gemeinsame Bezugspunkt im Bereich der Zugangsstelle gewählt wird.

12. Verfahren nach einem der Ansprüche 1 bis 11, dadurch gekennzeichnet, daß die von der Meßvorrichtung (3) gelieferten Daten einem Rechner eingegeben und zur Berechnung der jeweiligen Länge der einzelnen Rohre (8) oder zur Bestimmung des Einsatzes von Paßstücken zwischen den Rohren (8) verwendet wird.

13. Verfahren nach einem der Ansprüche 1 bis 12, dadurch gekennzeichnet, daß die Öffnungen in den Rohren (8) zunächst mit einem geringeren Durchmesser als dem der zugeordneten Mündungen der Abzweigleitungen (2) ausgeschnitten und dann mit Hilfe eines die Mündungen abtastenden Fühlers auf die Mündungsgröße fertiggeschnitten werden.

14. Verfahren nach einem der Ansprüche 1 bis 13, dadurch gekennzeichnet, daß die Dichtmanschette (13) mit ihrer Außenseite am Rand der ausgeschnittenen Öffnung und an der Innenwand der zugeordneten Abzweigleitung (2) anliegt.

15. Verfahren nach Anspruch 14, dadurch gekennzeichnet, daß die Dichtmanschette (13) nach ihrer Positionierung in der Öffnung und der Abzweigleitung (2) aufgeblasen wird.

16. Verfahren nach Anspruch 14 oder 15, dadurch gekennzeichnet, daß die Dichtmanschette (13) an ihrer Innenseite einen starren Stützkörper (14) aufweist.

17. Verfahren nach einem der Ansprüche 1 bis 16, dadurch gekennzeichnet, daß die Dichtmanschette (13) nach Ausfüllen des Zwischenraums zwischen den Rohren (8) und der Rohrleitung (1) wieder entfernt wird.

18. Verfahren nach Anspruch 17, dadurch gekennzeichnet, daß die Dichtmanschette (13) vor ihrer Entfernung durch Ablassen von Luft in ihrem Sitz gelockert wird.

19. Verfahren nach einem der Ansprüche 1 bis 18, dadurch gekennzeichnet, daß das Schneiden der Öffnungen und/oder das Einsetzen und Entfernen der Dichtmanschetten (13) durch eine Fernsehkamera (12) überwacht werden.

20. Verfahren nach einem der Ansprüche 17 bis 19, dadurch gekennzeichnet, daß nach dem Ent fernen der Dichtmanschetten (13) die Übergänge zwischen den Rohröffnungen und den Abflußleitungen (2) mittels einer Fernsehkamera (12) überprüft wird und erforderlichenfalls eine Ausbildung der Wandlaibungen mit Spachtelmasse erfolgt.

0260220

## FIG. 1

## FIG. 2

## FIG. 4

## FIG. 3

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl.4) |
|---|---|---|---|
| X | EP-A-0 158 042 (WIIK & HÖGLUND) * Seite 3, Zeilen 4-24; Seite 4, Zeilen 24-31; Ansprüche 1-3 * | 1 | F 16 L 55/16 |
| A | | 3-10,14 ,15 | |
| A | GB-A-2 092 493 (INSITUFORM) * Zusammenfassung; Ansprüche 1-4 * --- | 1,12,19 | |
| A | GB-A-2 147 966 (YARNELL) * Zusammenfassung; Figur * --- | 14-18 | |
| A | EP-A-0 029 343 (NUTTALL LTD.) * Zusammenfassung * --- | 1-3,19 | |
| A | EP-A-0 082 223 (DEMCO LTD.) * Zusammenfassung * --- | 1 | |
| A | DE-A-3 129 870 (ROGALSKI) --- | | |
| A | GB-A-2 096 265 (INSITUFORM) --- | | RECHERCHIERTE SACHGEBIETE (Int. Cl.4) |
| A | GB-A-2 041 147 (FUSION EQUIPMENT) --- | | F 16 L 55/00 |
| A | WO-A-8 302 490 (YARNELL) ----- | | |

Der vorliegende Recherchenbericht wurde für alle Patentansprüche erstellt

| Recherchenort | Abschlußdatum der Recherche | Prüfer |
|---|---|---|
| BERLIN | 10-11-1987 | SCHAEFFLER C.A.A. |